# DEMANDE DE BREVET EUROPEEN

(11) **EP 1 443 621 A1**
(43) Date de publication de la demande: **04.08.2004**
(21) Numéro de dépôt: 04300045.4
(22) Date de dépôt: 26.01.2004
(51) Int. Cl.: H02G 15/184, H02G 15/103

(54) **Connexion de deux câbles d'énergie électrique**

(30) Priorité: 31.01.2003 FR 0301142
(71) Demandeur: Nexans, 75008 Paris (FR)
(72) Inventeur: Cardinaels, Josef, 9230 Wetteren (BE)
(74) Mandataire: Lenne, Laurence

(57) **Abrégé**

La présente invention concerne une connexion de deux câbles d'énergie électrique, comportant chacun au moins un conducteur (3) entouré d'une enveloppe isolante (4), connexion comportant un connecteur (9) comportant des vis de serrage (15, 16) et destiné à connecter ensemble les extrémités mises à nu desdits conducteurs engagées dans ledit connecteur et maintenues au moyen desdites vis, ce connecteur (9) étant revêtu d'une plaque flexible (10) présentant une longueur au moins égale à la longueur des conducteurs dénudés et raccordés et une largeur au moins égale à la longueur périphérique du connecteur (9), posée et enroulée autour du connecteur.

Selon l'invention, cette plaque (10) comporte au moins une languette transversale (20) enroulée autour du bord de la plaque recouvrant l'enveloppe isolante (4) d'un des conducteurs à proximité du connecteur et pourvue d'une partie de fixation (21).

## Description

La présente invention se rapporte à une connexion de deux câbles d'énergie électrique.

Elle concerne plus précisément une connexion de deux câbles d'énergie électrique, comportant chacun au moins un conducteur entouré d'une enveloppe isolante, connexion comportant un connecteur équipé de vis de serrage et destiné à connecter ensemble les extrémités mises à nu des conducteurs engagées dans le connecteur et maintenues au moyen des vis.

L'invention s'applique plus particulièrement aux connexions de câble comportant une gaine isolante rétractable. La gaine est positionnée au-dessus du connecteur et est rétractée puis, après l'opération de rétraction, reste en position. Cette gaine tend donc à prendre la forme du connecteur qui est en dessous d'elle et de l'enveloppe isolante de chacun des câbles. Cependant, il reste toujours des espaces libres aux emplacements où le diamètre change, c'est-à-dire entre l'enveloppe isolante et le connecteur.

Une connexion électrique d'un type comparable est décrite dans le brevet EP 0 777 926.

Dans cette solution connue, pour améliorer la tenue aux claquages, une plaque composite bicouche et flexible entoure le connecteur, posée en long et enroulée autour du connecteur avec la première couche en contact avec le connecteur. Cette plaque composite comprend une première couche en matériau semi-conducteur ou conducteur et une seconde couche en .matériau non-conducteur. Cette plaque rectangulaire présente une longueur au moins égale à la longueur des conducteurs dénudés et raccordés et une largeur au moins égale à la longueur périphérique du connecteur.

Cependant, cette solution peut poser un problème dans le cas de connecteurs à contacts vissés.

En effet, dans de tels connecteurs, il existe une différence de diamètre entre l'enveloppe isolante et le connecteur essentiellement due au fait que cet ensemble de contacts vissés couvre généralement une plage importante de sections, par exemple de 50 à 300 mm², et est donc plus grande que l'enveloppe isolante de chaque câble. Un tel connecteur vissé est par exemple connu du document de brevet GB 2 262 396. De plus, le connecteur a une disposition excentrée par rapport au conducteur. Ceci est dû à la présence des vis qui augmentent encore la différence dimensionnelle entre l'enveloppe isolante et le connecteur. Les têtes des vis et des taraudages font des points vifs sur la surface du connecteur. Le résultat est que la gaine isolante ne peut pas suivre fidèlement les contours de l'enveloppe isolante de chaque câble et des surfaces du connecteur, et que les matières isolantes sont exposées à un champ électrique trop important juste aux emplacements les plus critiques sur le plan électrique. Ceci est un problème qui peut mener au claquage de la connexion surtout pour des applications à partir de 10 kVolts et qui peut être résolu en mettant une plaque semi-conductrice autour du connecteur comme écrit dans le document de brevet EP 0 777 926.

L'agencement connu du brevet EP 0 777 926, solution économique et techniquement flexible, pose alors le problème technique suivant. Compte tenu que le connecteur a un diamètre supérieur à celui de l'enveloppe isolante des conducteurs, la plaque enroulée a tendance à prendre la forme d'un tube de diamètre supérieur à celui de l'enveloppe isolante des conducteurs. Non suffisamment attachée sur le connecteur, la plaque rectangulaire risque de se déplacer lors de la mise en place de la gaine isolante rétractable externe. De ce fait, sa fonction peut être non complètement remplie, des espaces d'air étant libérés.

L'invention se propose de résoudre ce problème technique et pour ce faire, elle concerne une connexion de deux câbles d'énergie électrique, comportant chacun au moins un conducteur entouré d'une enveloppe isolante, connexion comportant un connecteur comportant des vis de serrage et destiné à connecter ensemble les extrémités mises à nu desdits conducteurs engagées dans ledit connecteur et maintenues au moyen desdites vis, ce connecteur étant revêtu d'une plaque flexible présentant une longueur au moins égale à la longueur des conducteurs dénudés et raccordés et une largeur au moins égale à la longueur périphérique du connecteur, posée et enroulée autour du connecteur, caractérisée en ce que cette plaque comporte au moins une languette transversale enroulée autour du bord de la plaque recouvrant l'enveloppe isolante d'un des conducteurs à proximité du connecteur et pourvue d'une partie de fixation.

Selon un mode de réalisation préféré, ladite plaque comporte une languette transversale à chacune de ses extrémités, ces deux languettes étant destinées à être enroulées autour des bords de la plaque recouvrant l'enveloppe isolante de chacun des conducteurs à proximité du connecteur et pourvues chacune d'une partie de fixation.

Avantageusement, la plaque comporte une languette transversale agencée sur son axe de symétrie transversal et pourvue d'une partie de fixation.

De préférence, chaque partie de fixation est une bande auto-adhésive.

La plaque peut être une feuille de caoutchouc semi-conducteur qui peut être auto-amalgamant.

L'invention est décrite ci-après plus en détail à l'aide de figures ne représentant que des modes de réalisation préférés de l'invention.
La figure 1 est une vue en coupe longitudinale partielle et en élévation partielle d'une connexion conforme à l'invention.
La figure 2 est une vue en élévation d'un connecteur reliant deux câbles.
La figure 3 est une plaque conforme à l'invention.
La figure 4 est une vue en élévation de cette plaque lors de sa mise en place sur un connecteur conformément à l'invention.

La description qui suit est relative à la connexion de deux câbles moyenne tension de plus de 10 kV. Bien que des câbles à conducteur unique soient décrits, l'invention s'applique également à des câbles multi-conducteurs.

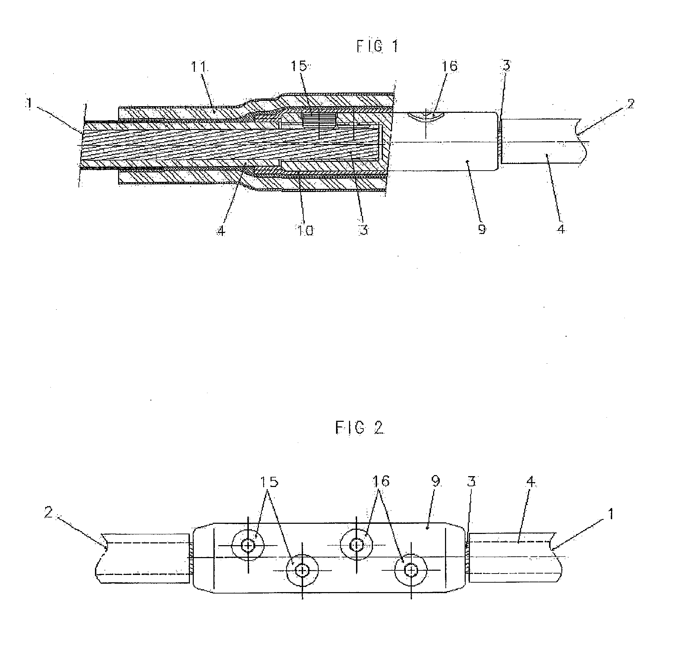

La figure 1 représente donc une connexion conforme à l'invention.

La connexion comporte deux câbles d'énergie électrique de moyenne tension 1, 2, dont les parties terminales concernées sont dénudées, raccordées et équipées pour leur reconstitution fonctionnelle.

Chaque câble comporte un conducteur central 3 et une enveloppe isolante 4 entourant le conducteur.

Un connecteur métallique 9 plus précisément représenté sur la figure 2 comporte des vis de serrage 15, 16. Il est destiné à connecter ensemble les extrémités mises à nu des conducteurs engagées dans le connecteur et maintenues au moyen des vis et relie donc mécaniquement et électriquement les deux conducteurs dénudés de câbles.

La connexion comporte également une plaque flexible 10, qui entoure le connecteur 9 et s'étend le long de ce connecteur et sur l'extrémité de l'enveloppe isolante de chaque câble et une gaine externe 11 qui entoure la plaque en place et s'étend sur l'extrémité de chaque câble.

Comme décrite dans le brevet EP 0 777 926, la plaque flexible 10 présente une longueur au moins égale à la longueur des conducteurs 3 dénudés et raccordés et une largeur au moins égale à la longueur périphérique du connecteur 9. Elle est posée et enroulée autour du connecteur 9 et peut comporter différentes caractéristiques décrites dans ce brevet antérieur. Dans le cas de câbles d'énergie moyenne tension, la plaque est simplement une feuille de caoutchouc semi-conducteur, éventuellement auto-amalgamant, de relativement petite épaisseur par exemple 0,5 mm.

La présente invention consiste en ce que cette plaque 10 comporte au moins une languette transversale 20 enroulée autour du bord de la plaque recouvrant l'enveloppe isolante d'un des conducteurs 3 à proximité du connecteur 9 et pourvue d'une partie de fixation 21.

Plus précisément, de préférence, la plaque 10 comporte une languette transversale 20A, 20B à chacune de ses extrémités, soit deux languettes destinées à être enroulées autour des bords de la plaque recouvrant l'enveloppe isolante de chacun des conducteurs à proximité du connecteur et pourvues chacune d'une partie de fixation 21A, 21 B.

La plaque 10 comporte une languette transversale 20C agencée sensiblement sur son axe de symétrie transversal et pourvue également d'une partie de fixation 21 C.

Ces parties de fixation 21 sont chacune une zone auto-adhésive, qui peut être créée en appliquant localement une bande adhésive double face ou en utilisant l'effet auto-amalgamant du caoutchouc, le caoutchouc collant dans ce dernier cas sur lui-même puisqu'il est seulement partiellement vulcanisé.

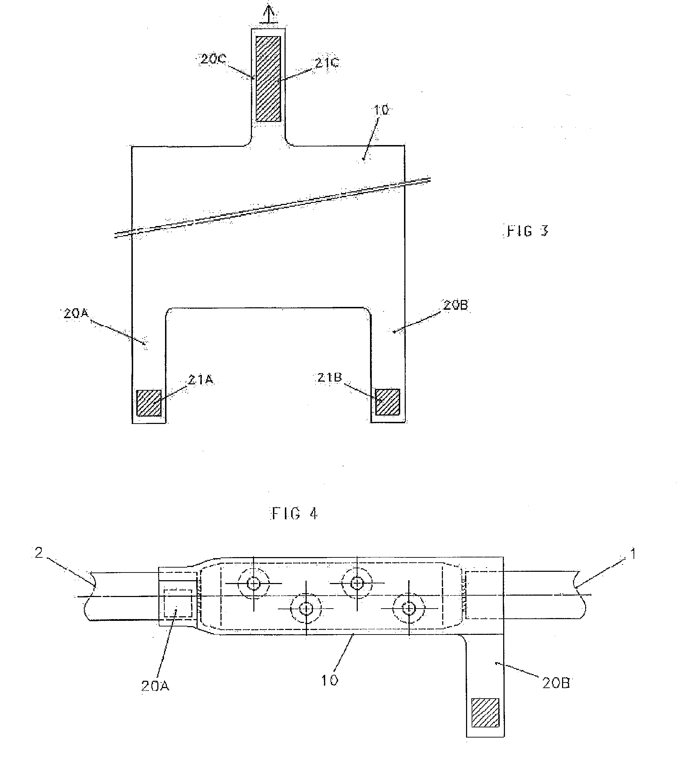

La figure 4 illustre la mise en place de la plaque 10 sur un connecteur 9 reliant deux câbles 1, 2.

La languette centrale 20C est tout d'abord collée sensiblement au milieu du connecteur 9 grâce à la bande adhésive 21 C, puis ainsi retenue longitudinalement, la plaque 10 est enroulée autour du connecteur 9 et de l'extrémité des câbles 1, 2. Une fois la plaque totalement enroulée, une des languettes d'extrémité 20A est fermement enroulée et pressée sur le bord de la plaque recouvrant l'enveloppe isolante du câble correspondant 2, puis il est opéré de la même façon avec l'autre languette d'extrémité 20B. Grâce à l'invention, la plaque est intimement posée autour du connecteur et des câbles, réalise de façon efficace la transition entre connecteur et câbles et supprime espaces d'air et angles vifs, susceptibles d'entraîner des claquages. De plus, il n'y a plus de risque de déplacement et d'entraînement de la plaque quand la gaine isolante est mise en place.

## Revendications

1. Connexion de deux câbles d'énergie électrique, comportant chacun au moins un conducteur (3) entouré d'une enveloppe isolante (4), connexion comportant un connecteur (9) comportant des vis de serrage (15, 16) et destiné à connecter ensemble les extrémités mises à nu desdits conducteurs engagées dans ledit connecteur et maintenues au moyen desdites vis, ce connecteur (9) étant revêtu d'une plaque flexible (10) présentant une longueur au moins égale à la longueur des conducteurs dénudés et raccordés et une largeur au moins égale à la longueur périphérique du connecteur (9), posée et enroulée autour du connecteur, **caractérisée en ce que** cette plaque (10) comporte au moins une languette transversale (20) enroulée autour du bord de la plaque recouvrant l'enveloppe isolante (4) d'un des conducteurs à proximité du connecteur et pourvue d'une partie de fixation (21).

2. Connexion selon la revendication 1, **caractérisé en ce que** ladite plaque comporte une languette transversale (20A, 20B) à chacune de ses extrémités, ces deux languettes étant destinées à être enroulées autour des bords de la plaque recouvrant l'enveloppe isolante de chacun des conducteurs à proximité du connecteur (9) et pourvues chacune d'une partie de fixation (21A, 21 B).

3. Connexion selon la revendication 1 ou 2, **caractérisé en ce que** ladite plaque (10) comporte une languette transversale (20C) agencée sensiblement sur son axe de symétrie transversal et pourvue d'une partie de fixation (21 C).

4. Connexion selon l'une des revendications précédentes, **caractérisé en ce que** chaque partie de fixation (21) est une bande auto-adhésive.

5. Connexion selon l'une des revendications précédentes, **caractérisé** en que ladite plaque (10) est une feuille de caoutchouc semi-conducteur.

6. Connexion selon la revendication 5, **caractérisé** en que ladite plaque (10) est une feuille de caoutchouc semi-conducteur auto-amalgamant.

7. Connexion selon l'une des revendications précédentes, **caractérisé** en qu'elle comporte une gaine isolante (11) adaptée pour couvrir intimement au moins ladite plaque.
